(19)

Europäisches Patentamt
European Patent Office
Office européen des brevets

(11) **EP 4 049 162 B1**

(12) **EUROPEAN PATENT SPECIFICATION**

(45) Date of publication and mention
of the grant of the patent:
**03.12.2025  Bulletin 2025/49**

(21) Application number: **19805432.2**

(22) Date of filing: **23.10.2019**

(51) International Patent Classification (IPC):
*G06N 20/20* (2019.01)    *G06F 21/62* (2013.01)
*G06N 3/04* (2023.01)    *G06N 3/08* (2023.01)

(52) Cooperative Patent Classification (CPC):
**G06F 21/6254; G06N 3/0442; G06N 3/0464;
G06N 3/09; G06N 3/098; G06N 20/20;** G06N 3/044;
G06N 3/045; G06N 3/08

(86) International application number:
**PCT/US2019/057587**

(87) International publication number:
**WO 2021/080577 (29.04.2021 Gazette 2021/17)**

(54) **ONLINE FEDERATED LEARNING OF EMBEDDINGS**

FÖDERIERTES ONLINE-LERNEN VON EINBETTUNGEN

APPRENTISSAGE FÉDÉRÉ EN LIGNE DE PLONGEMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.08.2022  Bulletin 2022/35**

(73) Proprietor: **Google LLC
Mountain View, CA 94043 (US)**

(72) Inventors:
• **GREEN, Bradley Ray
Mountain View, California 94043 (US)**
• **O'BANION, Shawn Ryan
Mountain View, California 94043 (US)**

(74) Representative: **Kennedy, Richard E. et al
Venner Shipley LLP
5 Stirling House
Stirling Road
The Surrey Research Park
Guildford GU2 7RF (GB)**

(56) References cited:
**US-A1- 2018 157 989    US-A1- 2019 197 396
US-A1- 2019 227 980**

• **ROBIN C GEYER ET AL: "Differentially Private
Federated Learning: A Client Level Perspective",
ARXIV.ORG, CORNELL UNIVERSITY LIBRARY,
201 OLIN LIBRARY CORNELL UNIVERSITY
ITHACA, NY 14853, 20 December 2017
(2017-12-20), XP081507396**

## Description

FIELD

The present disclosure relates generally to learning embeddings for entities. More particularly, the present disclosure relates to privacy-preserving federated learning techniques which enables the use of locally stored data to learn entity embeddings for, for example, an extremely large vocabulary of entities.

BACKGROUND

Embeddings are becoming commonly used in various machine learning problems and solutions. The term embedding can refer to a learned representation of an entity in a continuous numerical space such as, for example, a vector of numbers (e.g., floating point numbers). In some instances, the embedding space is a lower-dimensional space that enables encoding of information associated with an entity. As examples, embeddings can represent or encode information regarding various characteristics, interests, behaviors of, and/or interactions between various entities. Entities can include, as examples, natural language units such as words, items of content (e.g., image, videos, webpages, etc.), products, locations, places of business, users, and/or the like.

Embeddings have wide applicability, providing, as one example usage, a signal for ranking and recall of, for example, the results of similarity searches between a query and a database. In particular, the geometry of the embeddings space imbues meaning that can be leveraged: a distance between two embeddings for two entities (e.g., an L2 distance) can be indicative of a similarity between the two entities (e.g., a smaller distance indicates greater similarity). Thus, in some instances, similar items can be discovered by clustering or nearest-neighbor algorithms, and arithmetic in the spatial geometry also allows for analogy solving.

Embeddings can be learned directly in unsupervised learning or indirectly as a by-product of supervised learning. The information encoded in embeddings can be interpreted and leveraged by machine learning algorithms and, therefore, embeddings can be associated with (e.g., viewed as a subset of the parameters of) a machine-learned model.

US 2019/197396 A1 discloses methods, systems, and apparatus, including computer programs encoded on computer storage media, for sharing learned information among robots. In some implementations, a robot obtains sensor data indicating characteristics of an object. The robot determines a classification for the object and generates an embedding for the object using a machine learning model stored by the robot. The robot stores the generated embedding and data indicating the classification for the object. The robot sends the generated embedding and the data indicating the classification to a server system. The robot receives, from the server system, an embedding generated by a second robot and a corresponding classification. The robot stores the received embedding and the corresponding classification in the local cache of the robot. The robot may then use the information in the cache to identify objects.

"Differentially Private Federated Learning: A Client Level Perspective" (R. Geyer et al., arXiv:1712.07557) discloses an algorithm for client sided differential privacy preserving federated optimization. The aim is to hide clients' contributions during training, balancing the trade-off between privacy loss and model performance.

US 2019/227980 A1 discloses systems and methods for learning differentially private machine-learned models.

US 2018/157989 A1 discloses Systems, methods, and non-transitory computer-readable media that can receive JOINKEY information identifying a JOINKEY and embedding element information identifying a plurality of embedding elements associated with the JOINKEY. A training instance is created comprising a pre-determined number of embedding elements from the plurality of embedding elements. A plurality of negative samples from a sample cache are added to the training instance. One or more embeddings are updated based on the training instance.

SUMMARY

Aspects and advantages of embodiments of the present disclosure will be set forth in part in the following description, or can be learned from the description, or can be learned through practice of the embodiments.

Various implementations of the present disclosure relate to the use of federated learning to provide for the generation of embeddings within a distributed environment in which a high-quality centralized model is trained on training data distributed over a large number of clients. Implementations described herein allow for the learning of embeddings in such an environment despite potential unreliable network connections and low computational power of the client devices. In an example federated learning setting, in each of a plurality of rounds, each client independently updates the model based on its local data and communicates the updated model back to the server, where all the client-side updates are used to update a global model. The present disclosure describes systems and methods that may generate embeddings with local training data while preserving the privacy of a user of the client device.

One example aspect of the present disclosure is directed to a computer-implemented method for federated learning of embeddings. The method includes one or more federated learning iterations. The method includes collecting, by a client computing device, a local dataset that identifies one or more positive entities, wherein the local dataset is stored locally by the client computing device. The method includes obtaining, by the client computing device and from a server computing device, global values for a subset of embeddings associated with a machine-learned model, wherein the subset of embeddings include one or more positive entity embeddings respectively associated with the one or more positive entities and one or more negative entity embeddings respectively associated with one or more negative entities not identified in the local dataset, and wherein the subset of embeddings comprises a subset of a vocabulary of embeddings associated with the machine-learned model. The method includes learning, by the client computing device and based at least in part on the local dataset, updated values for one or more of the subset of embeddings associated with the machine-learned model. The method includes communicating, by the client computing device, information descriptive of the updated values for the one or more of the subset of embeddings associated with the machine-learned model to the server computing device.

Another example aspect of the present disclosure is directed to a computing system. The computing system includes one or more server computing devices configured to perform operations. The operations comprise maintaining a global version of a machine-learned model that comprises a vocabulary of embeddings. The operations comprise communicating, to respective client computing devices, respective slices of the vocabulary of embeddings, each slice containing a respective subset of the vocabulary of embeddings. The operations comprise receiving, from the client computing devices, respective updates to the respective subsets of the vocabulary of embeddings. The operations comprise updating the global version of the machine-learned model based on the respective updates to the respective subsets of the vocabulary of embeddings received from the client computing devices.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1 depicts a block diagram of an example computing system performing serving of slices of a larger vocabulary embeddings according to example embodiments of the present disclosure.
Figure 2 depicts a block diagram of an example computing system for federated learning of embeddings according to example embodiments of the present disclosure.
Figures 3A-B depict example machine-learned model inference schemes that can be performed at a client device according to example embodiments of the present disclosure.
Figures 4A-D depict example machine-learned model inference schemes that can be performed at a client device according to example embodiments of the present disclosure.
Figure 5 depicts a flow chart diagram of an example method to perform federated learning according to example embodiments of the present disclosure.
Figure 6 depicts a flow chart diagram of an example method to perform federated learning at a client device according to example embodiments of the present disclosure.

Reference numerals that are repeated across plural figures are intended to identify the same features in various implementations.

DETAILED DESCRIPTION

Overview

Generally, the present disclosure is directed to systems and methods that leverage a federated learning scheme to learn entity embeddings for a plurality of entities in a privacy-preserving manner. In particular, at each of a number of federated learning iterations, each of a plurality of client computing devices can learn, based on a respective set of locally stored data, updated values for a subset of embeddings included in a larger vocabulary of embeddings associated with a machine-learned model.

More particularly, as datasets grow larger and more distributed across many user devices, certain existing machine learning algorithms which are typically only applicable to controlled environments (such as data centers) where the data is properly distributed among machines and high-throughput fiber networks are available become infeasible.

Federated learning is a machine learning framework that enables training of a high-quality centralized model based on training data distributed over a large number of client computing devices. The clients may have low computational power and/or slow/unstable connections to the network (e.g., mobile devices). Federated learning may also be referred to as "federated optimization" in certain instances.

In some implementations, systems implementing federated learning can perform the following actions in each of a plurality of rounds of model optimization: a set of one or more clients are selected; each client in the set obtains information descriptive of a global version of a model from the server; each client in the set updates the model based on their local data; the updated models or model updates are sent by each client to the server; the server aggregates the updates (e.g., by averaging the updates) and improves the global model; and the server redistributes the global model to all the clients. Performing a plurality of rounds of the above actions iteratively improves the global model based on training data stored at the client devices.

One aspect of the present disclosure is directed to a slice-based embedding serving scheme for use within a federated learning framework. In particular, in some implementations, at each learning iteration, each client device receives from the server computing device only one or more smaller "slices" of embeddings from the larger vocabulary of embeddings. Furthermore, according to another aspect of the present disclosure, the slices of embeddings can be served in a manner which obfuscates which "members" of the slice are included in and/or updated based on the local dataset, thereby improving user privacy. The serving of limited slices of embeddings in this fashion allows the federated learning scheme to be applied to learning of embeddings in contexts in which transmission of the entire vocabulary of embeddings at each learning iteration is infeasible or otherwise undesirable (e.g., due to the vocabulary including an extremely large number of embeddings).

Additional aspects of the present disclosure are directed to the learning (e.g., jointly with the updated embeddings) of user embeddings for specific users. The learned user embedding can then be used (e.g., as context data) for further on-device inference. Further, in some implementations, parameter values for a machine-learned user embedding model can be learned in the federated learning scheme, all while keeping the particular user embedding private on the user's device.

More particularly, a vocabulary of embeddings (e.g., a total set of all embeddings associated with a machine learning solution) can be generated for and correspond to a set of entities. For certain entity types, the vocabulary of embeddings may be relatively manageable in data size (e.g., on the order of hundreds or thousands of embeddings). However, in other scenarios, the vocabulary of embeddings can be much larger in scale. For example, a vocabulary of embeddings that includes a respective embedding for each video contained on YouTube would be on the order of one billion (and growing every day).

The size of these large vocabularies of embeddings renders the naive application of the federated learning framework to the learning of such vocabularies of embeddings infeasible or otherwise suboptimal. In particular, communicating all (e.g., one billion) of the embeddings between the server and client at each round of federated learning represents a significant communications bottleneck.

In view of this problem, one aspect of the present disclosure is directed to a slice-based embedding serving scheme in which, at each learning iteration, each client device receives from the server computing device only one or more smaller "slices" of embeddings from the larger vocabulary of embeddings.

More particularly, a client computing device can collect and locally store a set of data that identifies one or more positive entities. As examples, the positive entities can be entities with which the client computing device or a user of the client computing device interacted. As one example, the positive entities can be locations that the client computing device or a user of the client computing device visited or was otherwise located. As another example, the positive entities can be items of content (e.g., videos, websites, advertisements, etc.) that the client computing device or a user of the client computing device visited, loaded, clicked upon, viewed, or otherwise interacted with. As another example, the positive entities can be products that the client computing device or a user of the client computing device purchased, ordered, or otherwise expressed approval of. As yet another example, the positive entities can be natural language units (e.g., words, phonemes, etc.) that the client computing device or a user of the client computing device used (e.g., when communicating with other individuals and/or when performing searches for content such as web content). As another example, the positive entities may be unrelated to a specific user but may be entities that in some way are identified by locally stored data on a client device, irrespective of any specific user.

In many instances, it is preferable to the user that this set of data is stored only locally at the client computing device (e.g., rather than being transmitted to a central server or other device). To facilitate such local storage while still learning a large vocabulary of embeddings, the client computing device can obtain only a limited subset of the vocabulary of embeddings at each round of learning. Specifically, the client computing device can obtain the one or more positive entities and one or more negative entities to be used as part of a negative sampling scheme.

Thus, one possible implementation of the proposed federated learning of embeddings is to simply send the embeddings for the positive entities identified in the locally stored data and also the embeddings for one or more negative entities which may, for example, be randomly chosen from the set of entities at large. Use of this smaller set of embeddings represents an improvement relative to the communication of the entire vocabulary of embeddings at each iteration and, in fact, represents an ideal set of embeddings to transmit from the perspective of communication cost.

However, in some instances, use of this smaller set of embeddings can be improved to improve user privacy. In particular, this small set of embeddings may reveal too much information about each user or client device. For example, it may be possible for an observing party to distinguish the positive entities (which are likely related) from the negative entities (which may be randomly chosen).

In view of the above, in order to avoid transmission of the entire vocabulary of embeddings, but to improve the privacy associated with set of transmitted embeddings, the embeddings can be served from the server to the client devices in slices of embeddings. For example, each slice of embeddings represents a subset of the vocabulary that contains a number of embeddings (e.g., the number may be sufficiently large that analysis of the embeddings included in one or more slices served to a particular client computing device does not unduly reveal private information). Thus, when a slice of embeddings is served to the client it will typically include both positive embeddings and negative embeddings and it will be challenging for any observing party to distinguish the two (e.g., particularly when both the positive and negative embeddings contained in slice are related in some way or otherwise all plausibly positive or negative).

More particularly, a large vocabulary of embeddings can be organized (e.g., partitioned) into a plurality of slices. Each slice can contain some number of embeddings (e.g., the number can be a hyperparameter). At each learning iteration, the client computing device can serve to each client computing device the particular slices that include the one or more positive entities that are identified in the that is locally stored by such client computing device. The client computing device can use the embeddings included in the slices which do not correspond to positive entities as negative examples. In addition, in some implementations, one or more additional slices that do not contain any of the positive entities can be served so as to provide further obfuscation of the identity of the positive entities.

According to an aspect of the present disclosure, in some implementations, the vocabulary of embeddings can be organized into the plurality of slices on the basis of semantic relatedness or other forms of relatedness (e.g., distance within the embedding space).

As one example, if the vocabulary of embeddings includes respective embeddings for a plurality of locations, similar locations can be included in respective slices. For example, embeddings for all locations King County, Washington can be included in one slice, while embeddings for all locations in Snohomish County, Washington can be included in another slice, and so on. The division of locations into slices based on geographic relatedness can be performed according to a number of different divisions, including based on political boundaries (e.g., county lines), based on inclusion in respective map tiles associated with a geographic information system, and/or other divisions.

As another example, if the vocabulary of embeddings includes respective embeddings for a plurality of movies, similar movies can be included in respective slices. For example, embeddings for all movies in the scary movie genre can be included in one slice, while embeddings for all movies included in the sports genre can be included in another slice, and so on. Other divisions are possible as well (e.g., actors, directors, settings, etc.). Further, while locations and movies are given as examples, other forms of entities can be grouped based on various other types of semantic features or relatedness.

As yet another example, the vocabulary of embeddings can be partitioned into slices by applying a clustering algorithm to the embeddings themselves, thereby producing a plurality of clusters which can be used to define the slices. The clusters can be overlapping or non-overlapping.

Thus, the embeddings can be organized into various slices which, in some implementations, contain semantically-related embeddings. One benefit of using such slices is to preserve the privacy of the local data used to update the global model parameters. For example, although it may be observed that a client device receives the slice of embeddings for all locations in King County, the specific embeddings/locations within King County that are positive entities for the client computing device is still highly obfuscated/undetectable.

Stated differently, in some implementations, the relationships between the embeddings distributed to the client and the local data on the client for training the parameters may be obfuscated by distributing a superset of parameters to each client, the superset containing the parameters targeted for updating using the local data on the client as well as additional parameters logically or semantically related to the targeted parameters but not corresponding to positive entities.

After receiving the slices of embeddings from the server computing device, the client computing device can learn (e.g., through application of gradient-based update techniques such as stochastic gradient descent (SGD), Adagrad, or the like) updated values for at least some of the embeddings (e.g., the positive embeddings and at least some of the negative embeddings included in the slice(s)) based on the locally stored data. As one example, the skip-gram model or the bag of words model can be generalized to any form of entity and updated values for the embeddings can be learned using a log likelihood approach.

In another aspect, the present disclosure is directed to generating user embeddings locally on the client devices which, optionally in cooperation with a global model trained by federated learning, provide representations of characteristics of the user or users of the particular client devices. As one example, the user embedding can be jointly learned as an input to the machine-learned model alongside positive embeddings. As another example, parameter values for a machine-learned user embedding model can be jointly learned with the embeddings. The parameter values for the machine-learned user embedding model can be learned in a federated fashion, but without communicating the user embedding itself to the server. The learned user embedding and/or user embedding model can thereafter be used to perform improved on-device inference at the client computing device.

In contrast to previous work, implementations of the systems and methods of the present disclosure provide for improved model generation and training while preserving client privacy. Traditionally, embeddings trained at central servers have limited access to the abundance of training data available locally on the client device, the access being limited in some examples by connectivity between the client device and the server, the sensitivity of the training data, and the like. The embeddings trained by implementations of methods and systems of the present disclosure advantageously may benefit from access to local data on a client device while further reducing the distribution and/or assimilation of sensitive information from the client device.

The systems and methods of the present disclosure provide a number of technical effects and benefits. For instance, federated learning offers several advantages compared to performing learning at a centralized server. In one aspect, federated learning leverages the computational power of a large number of computing devices (e.g., user mobile devices) to improve the overall abilities of the interconnected computing system formed thereby. As one example, the techniques described herein enable the effective training of a machine-learned embeddings used to perform a computational task (e.g., an image processing, computer vision task, sensor data processing task, audio processing task, text processing task, classification task, detection task, recognition task, data search task, etc.). Thus, the systems and methods of the present disclosure can improve the ability of a computing system that includes the machine-learned model to perform various practical applications, thereby improving the functioning of such a computing system.

Another benefit of federated learning is the ability to train models and generate embeddings with reduced communication of private information. Generally, information of the model update is less sensitive that the data itself. Thus, user data that is privacy sensitive remains at the user's computing device and is not uploaded to the server. Instead, only the less sensitive model update is transmitted. In some implementations, the server communications may further be secured by cryptographic protocols or other differential privacy techniques. In further implementations, the individual updates submitted by a client may not be retained individually after aggregation of a set or batch of client updates. The privacy of federated learning may be further increased according to the present disclosure by obfuscating the model parameters and/or embeddings being updated by a particular client by selectively distributing model parameters to be updated by the client among a larger subset of model parameters. In this manner, the particular embeddings associated with the activity of the client device (e.g., in providing the training data used to update the embedding) are not directly traceable from the server's distribution of embeddings. By reducing the sensitivity of the communicated information, the computational demand for encrypted communication is lowered, thereby increasing the efficiency of resource usage for other tasks of the computing device(s).

Of additional benefit, the retention of the training data on the local device may permit more detailed and more heterogenous training data. Training data may be drawn from a variety of sources, including text entry to various applications, voice commands and other audio inputs, user gestures, webpage and/or application navigation and retrieval, and the like to form a heterogenous set. While such a diverse set of training data may improve the training of a model, the set may form a holistic snapshot of user activity and reflect highly sensitive information. Advantageously, retaining the training data locally permits the use of more heterogenous training data while also limiting the communication of sensitive information. **In** the same manner, local training may have access to a more comprehensive and representative stream of user data (e.g., complete location history rather than infrequent samples) than would otherwise be available due to the sensitivity of the information. The depth and heterogeneity of the training data may also permit, in some implementations, embeddings generated therewith to be more fully featured and represent more diverse information about the embedded entity and/or interactions with entities across varied domains.

Generally, the above-noted improvement in the detail and diversity of training data may enable more effective and/or accurate embeddings to be generated in fewer training iterations. Accuracy improvements can provide for improvements in the ability of computing devices and systems to perform a desired task with greater speed and efficiency. For instance, a computing device which performs prediction, recognition, and/or categorization tasks involving embeddings generated as disclosed herein may perform the tasks satisfactorily after fewer training iterations at a lower expense of computing resources. Additionally, the accuracy of the embeddings may also enable, in some embodiments, a user of a computing device or system as disclosed herein to accomplish a particular task with fewer repetitions, lower wait times, and an improved user experience.

Of additional benefit, methods and systems of the present disclosure, in one aspect, are directed to the joint learning/training of global embeddings (e.g., embeddings of entities available to/accessed by a number of clients) and local user embeddings (e.g., embeddings of the characteristics of a particular client). The joint training of global embeddings with user embeddings may advantageously permit the user embeddings to be discovered and/or generated without feature engineering beforehand, thus reducing the manual and/or computational cost of generating user embeddings and improving the functionality of machine-learned systems dependent thereon.

As another example technical effect and benefit, the systems and methods of the present disclosure provide an slice-based serving scheme that enables the federated learning of embeddings without requiring transmission of the entire vocabulary of embeddings at each learning iteration but without unduly comprising user privacy.

Examples of embodiments and implementations of the systems and methods of the present disclosure are discussed in the following sections.

Example Devices and Systems

In some implementations, each of a number of client computing devices (shown as example devices 102a and 102b) may collect local data (shown as example locally stored data 108a and 108b). The local data may include sequences (e.g., temporal sequences) or other descriptors of entities and/or events. Thus, in one example, the locally stored data 108a can include data that describes a sequence of entities. These entities identified by the locally stored data 108a can be referred to as positive entities for client device 102a. In some implementations, a respective timestamp can be included in the data 108a for each positive entity. In some implementations, only data samples collected within a recent window of data can be used to update the model/embeddings.

Examples of entities and events may include audio, textual, photographic, or videographic inputs or outputs of the client computing device, including inputs to and outputs from sensors within the device (e.g., sensors for tracking spatial location and translation, biometrics, and/or interactions with additional other devices). Additional or alternative entities can include products, locations, places of business, users, and/or the like. In some examples, the local data 108a collected may include a history of a user's interaction with the device 102a and applications stored, accessed, and/or executed thereon. The data 108a may be stored in ephemeral or persistent storage media on the client device 102a.

The client device 102a may process the data 108a to learn embeddings. The device 102a may obtain at least a subset of current global embeddings 106 for one or more of the entities described by the stored data 108a (e.g., by retrieving subset of the global embeddings 106 from a repository or server 104). The current global embeddings 106 may optionally be pre-trained according to embedding learning methods known in the art.

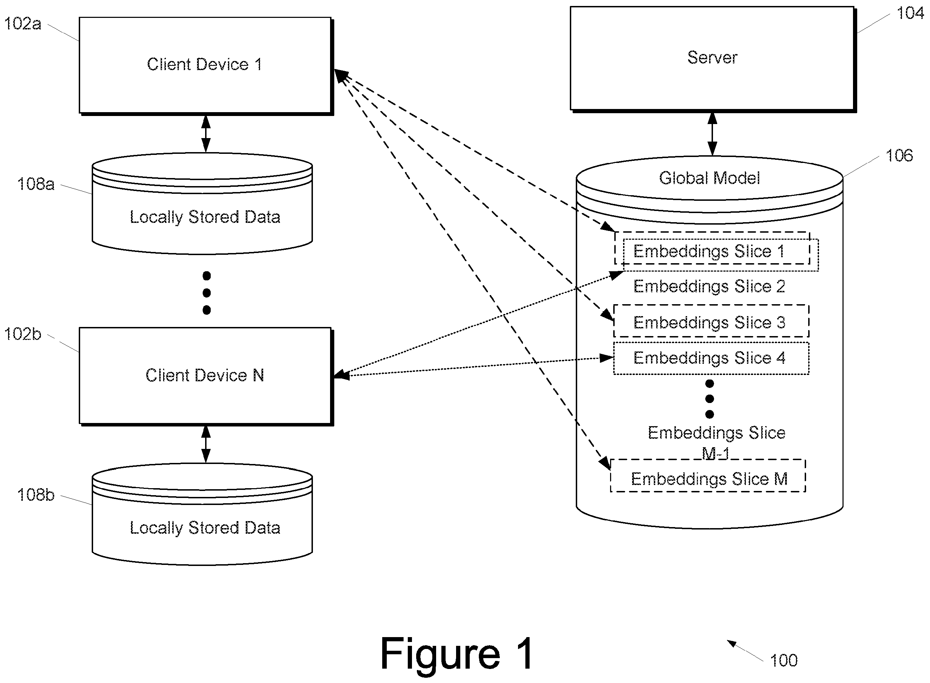

In some implementations, the population of global embeddings 106 and/or the functionality of the client device 102a may be configured such that the client device 102a may obtain a complete set of current embeddings 106 in order to further learn the embeddings. Alternatively, the client device 102a may only obtain one or more subset or slice of the population of embeddings 106. As an example, as illustrated in Figure 1, client device 102a has obtained Embeddings Slice 1, Embeddings Slice 3, and Embeddings Slice M. Likewise, client device 102b has obtained Embeddings Slice 1 and Embeddings Slice 4.

Each slice obtained by the client device 102a may include one or more of the embeddings associated with the one or more of the positive entities described by the stored data 108a and/or one or more additional entities not described by the stored data 108a (e.g., which may be referred to as "negative entities" for the client device 102). Thus, in some implementations, the particular slices obtained by the client device 102a (e.g., slices 1, 3, and M) represents a superset of the embeddings to be trained based on the stored data 108a.

In some implementations, each slice may comprise a collection of similar data that can be requested by an identifier. The identifier may optionally be similar (but generally not identical to) the actual data being requested. In some examples, where the entire global model 106 is divided into subsets or slices, the union of the slices is a vocabulary, and each slice is a subset of the vocabulary.

In some implementations, a server 104 may provide a slice to a client (e.g., 102a) containing a set of embeddings which each correspond to an identifier submitted by the client. The identifier may be determined by the client 102a to obfuscate the identity of the desired embeddings while still providing the server 104 with enough information to retrieve a slice containing the desired embeddings.

The association between the embeddings in the set as indicated by the identifier may generally follow any schema of relationships, such as logical relationships. Without limitation of relationships contemplated among elements of a slice, relationships may be determined with respect to semantic hashing, social hashing, spatial grouping, temporal grouping (e.g., set of entities created and/or timestamped at a certain time or within a certain range of times), application grouping (e.g., set of embeddings for tasks or sequences of tasks executed within an application), and/or any implementation of logical subsets of embeddings. In some examples, embeddings may be assigned to slices based on calculations performed with the embeddings (e.g., similarity searches, clustering algorithms, rankings, and the like). The embeddings may be reassigned to slices dynamically as the embeddings are updated. In some implementations, the embeddings are distributed according to a sharding function or algorithm.

In one example, consider a map-tile cover of a geographic region. A slice of embeddings can include the embeddings for all entities included in or covered by a set of one or more of map tiles (e.g., where the tile data is embedded as a vector). In one example, the set of tiles can include all tiles that intersect with a bounding box of arbitrary size around a given latitude and longitude. In other examples, the slice may embeddings associated with entities contained within a group of tiles associated with a specified geographic association (e.g., a measure of proximity).

In some implementations, the server 104 may accept a query to the slice index by a latitude and longitude (or other geographic identifier such as zip or area code) provided by the client and return one more slices containing the embeddings associated with all tiles intersecting with the bounding box prescribed by the queried coordinates. The coordinates provided by the client can deviate from the actual tile coordinates desired by the client (e.g., based on the addition of obfuscation noise) to the extent that the bounding box includes a number of tiles surrounding the queried coordinates. For example, if the bounding box includes tiles extending at least a distance *D* from a set of queried coordinates, then the client can obfuscate its true desired coordinates by submitting a set of query coordinates up to a distance *D* away from the true desired coordinates.

Once a subset of the global embeddings 106 is obtained by the client device 102a, the client device 102a can determine one or more updates to one or more of the embeddings in view of the local data 108a. The local data 108a may form a set of ground truth training data for training the machine-learned embeddings. In some implementations, the ground truth training data includes ground truth input-output pairs for the machine-learned model, and the actual input-output pairs of the machine learned model are compared to the ground truth to determine an error or loss. Updates to one or more parameters of the machine-learned model (e.g., the embeddings) may then be computed by the client device 102a based on the determined error. In one example, a generalized implementation of the word2vec model may be used. For instance, an update may be calculated according to

$$w^{(updated)} = w^{(old)} - \lambda^c U \qquad\qquad (1)$$

where $w^{(old)}$ is a current embedding, $w^{(updated)}$ is an updated version of the embedding based on the update term *U,* where *U* is determined by the local data and scaled by the client learning rate $\lambda^c$ (e.g., *U* may comprise a gradient of an objective function evaluated with the training data).

In some implementations, satisfactory convergence of the machine-learned embeddings can be obtained without updating every embedding with each training iteration. In some examples, each training iteration includes computing updates for a target embedding and a set of negative samples. In some implementations, each round of training can be performed with the soft-max objective function in a manner similar to Skip-Gram training or bag of words training.

In general, the negative samples may be obtained by the client device 102a in the same manner as the slices. As one example, the negative samples may be randomly selected from the general population or vocabulary of embeddings 106. As another, more efficient example, the negative samples can be the negative embeddings that are included within the slices that were obtained by the client device 102a in order to access the positive embeddings. For example, the negative samples may, in some implementations, be randomly selected from a slice which also contains the target embedding. Thus, the concept of slices allows for efficient retrieval of negative samples with guaranteed privacy. In particular, each request for a slice can also contain negative samples from the training vocabulary at, e.g., a predetermined frequency.

In some implementations, the slices and/or negative samples obtained by the client device 102a are retrieved and updated in such a way as to obfuscate the target embedding(s) desired by the client device 102a and associated with the local data 108a on the device 102a.

After one or more updating iterations have been completed on the client device 102a, the client device 102a may transmit information indicative of the updates to a server 104 for updating the global embeddings 106. The information indicative of the updates may be provided to the server 104 for aggregation in a federated learning algorithm. For instance, the server 104 may execute a federated averaging algorithm. The federated averaging algorithm may aggregate individual updates (e.g., updated local embedding versions) from a plurality of clients to obtain updated global embeddings 106.

In some implementations, updated parameters are provided to the server by a plurality of clients, and the respective updated parameters are summed across the plurality of clients. The sum for each of the updated parameters may then by divided by a corresponding sum of weights for each parameter as provided by the clients to form a set of weighted average updated parameters. In some implementations, updated parameters are provided to the server 104 by a plurality of clients, and the respective updated parameters scaled by their respective weights are summed across the plurality of clients to provide a set of weighted average updated parameters. In some examples, the weights may be correlated to a number of local training iterations or epochs so that more extensively trained updates contribute in a greater amount to the updated parameter version. In some examples, the weights may include a bitmask encoding observed entities in each training round (e.g., a bitmask may correspond to the indices of a slice of embeddings and/or negative samples provided to a client).

The information indicative of the updates may include the locally-updated embeddings (e.g., the updated embeddings or a difference between the updated embeddings and the previous embeddings). In some examples, the information indicative of the updates may include an update term, a corresponding weight, and/or a corresponding learning rate, and the server may determine therewith an updated version of the corresponding embedding. Communications between the server 104 and the clients can be encrypted or otherwise rendered private.

Updates computed for the global machine-learned model 106 may also incorporate a variable learning rate. In general, the learning rate scales the magnitude of the update calculated for an embedding. In some examples, an algorithm or function is used to determine a learning rate inversely correlated (e.g., linear or nonlinear correlation) to the frequency at which updates are calculated for the embedding subject to the update, and/or inversely correlated to the frequency at which the training data represents entities corresponding to the embedding subject to the update. Advantageously, the learning rate may be determined to improve the learning of long-tail embeddings (e.g., embeddings with a smaller quantity of available training data as compared to the embedding vocabulary as a whole). For instance, the AdaGrad model may be used for determining learning rate.

In some implementations, a learning rate is determined for each embedding being updated. In some implementations, a global update for a parameter may be calculated as

$$w_{global}^{(updated)} = w_{global}^{(old)} - \lambda_{server} U_{federated} \qquad (2)$$

where $w_{global}^{(old)}$ is a current global embedding, $w_{global}^{(updated)}$ is an updated version of the global embedding based on the federated update term $U_{federated}$, where $U_{federated}$ is determined by the aggregation of client updates local data and scaled by the server learning rate $\lambda_{server}$

Advantageously, the server learning rate may be determined to adapt the learning rate of the update applied to the global parameter based on, e.g., the frequency with which the embedding is updated across a portion or all of the federated clients (which may, in some implementations, be reflected in a retrieval count for a slice containing the embedding) and/or a magnitude of gradient updates of the embedding across the federated clients. For instance, a learning rate may be calculated as

$$\lambda_i = \eta \cdot \frac{\|w_i\|}{\|\nabla L(w_i)\|} \qquad (3)$$

where $\lambda_i$ is the adapted learning rate for the $i$-th embedding $w_i$, $i$ is selected from the set of indexes for embeddings within the vocabulary, $\eta$ is a global learning rate, and $\|\nabla L(w_i)\|$ is the magnitude of the gradient of the objective function calculated with respect to the value of the embedding and determined to represent a magnitude of gradient updates of the embedding across the federated clients. In some implementations, $U_{fegderated}$ represents an aggregate value of $\nabla L(w_i)$ from all participating clients, and a learning rate calculated according to Equation (3) would reduce or eliminate the influence of the gradient magnitude on the magnitude of the update applied to each parameter. Additionally, or alternatively, a variable learning rate may be employed for local training on the client device.

The information indicative of the updates may be obfuscated in some implementations to increase the privacy around the activity of the client device. In some examples, random noise may be added to all embeddings and/or updates. Additionally, or alternatively, cryptographic protocols may be used (e.g., secure aggregation protocols). Advantageously, updates provided for any negative samples may further obfuscate information regarding any target embedding(s).

In general, the client devices may compute local updates to embeddings periodically or continually. The server may also compute global updates based on the provided client updates periodically or continually. In some implementations, the learning of embeddings includes an online or continuous machine-learning algorithm. For instance, some implementations may continuously update embeddings within the vocabulary without cycling through training the entire vocabulary.

Figure 1 depicts an example system 100 for training one or more global machine learning models 106 using respective training data 108a-b stored locally on a plurality of client devices 102a-b. Further to the descriptions above, a user may be provided with controls allowing the user to make an election as to both if and when systems, programs or features described herein may enable collection, storage, and/or use of user information (e.g., training data 108), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Client devices 102a-b can be configured to provide the local updates to server 104. As indicated above, training data 108a-b may be privacy sensitive. In this manner, the local updates can be performed and provided to server 104 without compromising the privacy of training data 108a-b. For instance, in such implementations, training data 108a-b is not provided to server 104. The local update does not include training data 108a-b. In some implementations, one or more of encryption techniques, random noise techniques, and/or other security techniques can be added to the training process to obscure any inferable information.

In some implementations, the server 104 can apply one or more scaling or other techniques to the local updates to determine the global update. For instance, a local step size can be applied for each client device 102, the aggregation can be performed proportionally to various data partition sizes of client devices 102, and/or one or more scaling factors can be applied to the local and/or aggregated updates. It will be appreciated that various other techniques can be applied without deviating from the scope of the present disclosure.

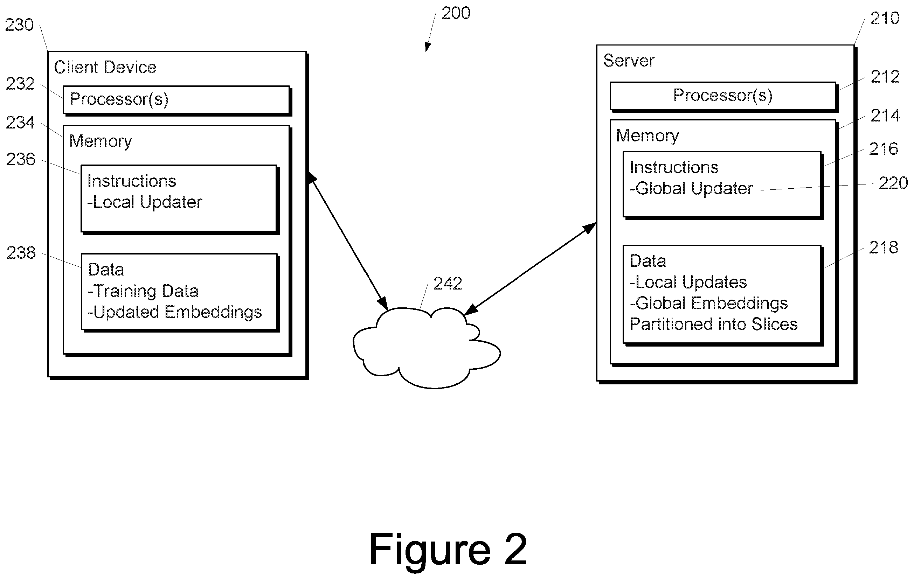

Figure 2 depicts a more detailed component-level diagram of an example computing system 200 that can be used to implement the methods and systems of the present disclosure. The system 200 can be implemented using a client-server architecture that includes a server 210 that communicates with one or more client devices 230 over a network 242. Thus, Figure 2 provides an example system 200 that can implement the scheme illustrated by system 100 of Figure 1.

The system 200 includes a server 210, such as a web server. The server 210 can be implemented using any suitable computing device(s). The server 210 can have one or more processors 212 and one or more memory devices 214. The server 210 can be implemented using one server device or a plurality of server devices. In implementations in which a plurality of devices are used, such plurality of devices can operate according to a parallel computing architecture, a sequential computing architecture, or a combination thereof.

The server 210 can also include a network interface used to communicate with one or more client devices 230 over the network 242. The network interface can include any suitable components for interfacing with one more networks, including for example, transmitters, receivers, ports, controllers, antennas, or other suitable components.

The one or more processors 212 can include any suitable processing device, such as a microprocessor, microcontroller, integrated circuit, logic device, or other suitable processing device. The one or more memory devices 214 can include one or more computer-readable media, including, but not limited to, non-transitory computer-readable media, RAM, ROM, hard drives, flash drives, or other memory devices. The one or more memory devices 214 can store information accessible by the one or more processors 212, including computer-readable instructions 216 that can be executed by the one or more processors 212.

The instructions 216 can be any set of instructions that when executed by the one or more processors 212, cause the one or more processors 212 to perform operations. For instance, the instructions 216 can be executed by the one or more processors 212 to implement a global updater 220. The global updater 220 can be configured to receive one or more local updates and to determine a global model based at least in part on the local updates.

As shown in Figure 2, the one or more memory devices 214 can also store data 218 that can be retrieved, manipulated, created, or stored by the one or more processors 212. The data 218 can include, for instance, local updates, global parameters, and other data. The data 218 can be stored in one or more databases. The one or more databases can be connected to the server 210 by a high bandwidth LAN or WAN, or can also be connected to server 210 through network 242. The one or more databases can be split up so that they are located in multiple locales.

The server 210 can exchange data with one or more client devices 230 over the network 242. Any number of client devices 230 can be connected to the server 210 over the network 242. Each of the client devices 230 can be any suitable type of computing device, such as a general purpose computer, special purpose computer, laptop, desktop, mobile device, navigation system, smartphone, tablet, wearable computing device, gaming console, a display with one or more processors, embedded device, edge device, or other suitable computing device.

Similar to the server 210, a client device 230 can include one or more processor(s) 232 and a memory 234. The one or more processor(s) 232 can include, for example, one or more central processing units (CPUs), graphics processing units (GPUs) dedicated to efficiently rendering images or performing other specialized calculations, tensor processing units (TPUs), and/or other processing devices. The memory 234 can include one or more computer-readable media and can store information accessible by the one or more processors 232, including instructions 236 that can be executed by the one or more processors 232 and data 238.

The instructions 236 can include instructions for implementing a local updater configured to determine one or more local updates according to example aspects of the present disclosure. For example, the local updater can perform one or more training techniques such as, for example, backwards propagation of errors to re-train or otherwise update the model based on the locally stored training data. The local updater can be configured to perform structured updates, sketched updates, or other techniques. The local updater can be included in an application or can be included in the operating system of the device 230.

The data 238 can include one or more training data examples to be used in solving one or more optimization problems. The training data examples of each client device 230 can be distributed unevenly among the client devices, such that no client device 230 includes a representative sample of the overall distribution of the training data examples.

The data 238 can further include updated parameters to be communicated to the server 210.

The client device 230 of Figure 2 can include various input/output devices for providing and receiving information from a user, such as a touch screen, touch pad, data entry keys, speakers, and/or a microphone suitable for voice recognition.

The client device 230 can also include a network interface used to communicate with one or more remote computing devices (e.g. server 210) over the network 242. The network interface can include any suitable components for interfacing with one more networks, including for example, transmitters, receivers, ports, controllers, antennas, or other suitable components.

The network 242 can be any type of communications network, such as a local area network (e.g. intranet), wide area network (e.g. Internet), cellular network, or some combination thereof. The network 242 can also include a direct connection between a client device 230 and the server 210. In general, communication between the server 210 and a client device 230 can be carried via network interface using any type of wired and/or wireless connection, using a variety of communication protocols (e.g. TCP/IP, HTTP, SMTP, FTP), encodings or formats (e.g. HTML, XML), and/or protection schemes (e.g. VPN, secure HTTP, SSL).

Example Machine-Learned Models

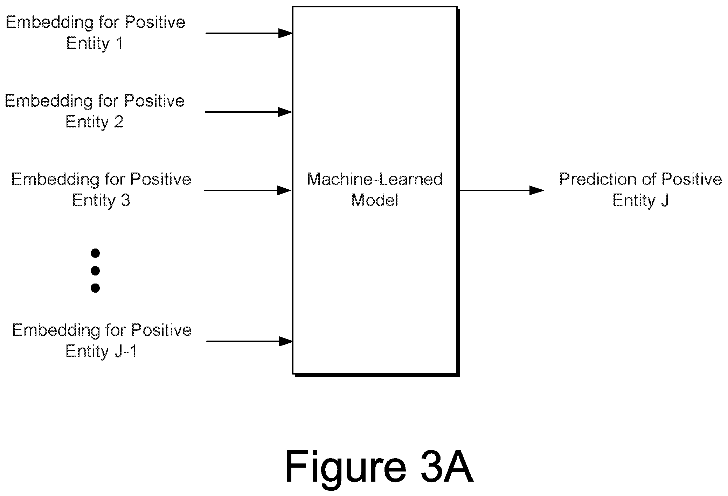

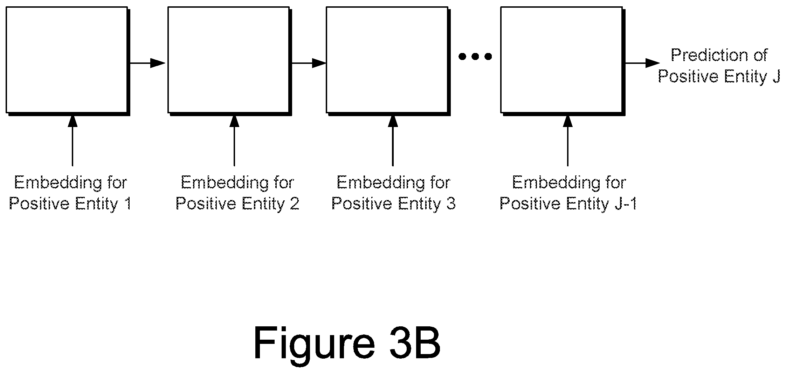

Figures 3A and 3B show example machine-learned models that use entity embeddings. As shown in Figure 3A, a machine-learned model can receive as inputs the respective embeddings for a sequence of positive entities 1 through J-1. Based on the respective embeddings for the sequence of positive entities 1 through J-1, the machine-learned model can predict the identity of positive entity J. Similarly, Figure 3B shows an alternative machine-learned model that processes the respective embeddings for the sequence of positive entities 1 through J-1 according to a sequence of processing steps.

In some implementations, the output of each of the models shown Figures 3A and 3B can be a respective probability or other measure of match for each possible entity. A highest probability or best match can be selected as the ultimate output prediction.

Although the models illustrated in Figures 3A and 3B are unidirectional in nature (e.g., predict entity J based on entities that preceded entity J), the present disclosure is not limited to unidirectional models, but instead can be applied to bi-directional models such as generalizations of the bag of words approach.

Figures 3A and 3B show the machine-learned models performing inference. During training, the prediction output by the model can be compared to a ground truth answer (e.g., a "correct" positive entity) using a loss function. The loss function can be backpropagated to learn updates to the model parameters of the machine-learned model and, further, updates to the embeddings themselves (e.g., updates to the embeddings for positive entities 1 through J-1). In some implementations, additional embeddings other than the positive embeddings (e.g., one or more negative embeddings) can be updated as well.

The updates to the model parameters of the machine-learned model and, further, updates to the embeddings themselves can be communicated to the central server for aggregation to determine a global set of embeddings and/or model parameters.

User Embeddings

In one aspect, the present disclosure is directed to generating embeddings which numerically encode information about the user(s) of a client device. Strict client privacy concerns may preclude user embeddings from either being federated or available to the server. However, a representation of the user is valuable in multiple personal artificial intelligence and/or machine learning applications. Methods and systems according to the present disclosure may advantageously generate user embeddings jointly with the federated learning of embeddings for other entities.

In some implementations, user embeddings may be learned as context to other entity embeddings (e.g., data item embeddings). The item embeddings may be learned according to federated learning methods as disclosed herein and may be iteratively updated with respect to a set of global item embeddings. The user embeddings may jointly be learned as context to the item embeddings and may, in some implementations, be learned implicitly from the local training data on the client device. **In** some implementations, item embeddings may be trained in a federated learning process to represent information and characteristics of the entities consistent across the global model (e.g., and with respect to all users thereof) while the user embeddings are indicative of a particular user's characteristics and provide context to the global model parameters to better adapt the global model to a particular user. **In** some implementations, when user embeddings are learned jointly with the federated learning of item embeddings, the training influence of the user embedding on the updates to the item embeddings is averaged out in the federated learning process, permitting the item embeddings to converge globally while the user embeddings retain information characteristic of a particular user.

**In** one example, a user embedding may be learned that allows the prediction of the user's behavior and/or preferences (e.g., interaction with the next item in a sequence). **In** particular, a user embedding and a machine-learned model (e.g., a neural network, such as a convolutional neural network (CNN)) may be learned jointly. Using federated learning, the learning parameters of the model are shared between a server and a plurality of clients by federated learning processes as disclosed herein. The user embedding jointly produced by this architecture may be preserved locally. **In** another example, a direct approach would be to train embeddings jointly with user interaction through a multi-tower approach. Another example may include using a sequence model (e.g., Long Short-Term Memory or Gated Recurrent Units models) to generate locally-preserved user embedding vectors while model weights will be shared with a central server for federated averaging.

In some implementations, the user embeddings may be used locally on the client device to improve the performance of the globally trained embeddings. For instance, in predictive tasks, a user-specific context vector may adapt a global prediction based on a user's idiosyncratic tendencies. For example, a global model may provide for the prediction of likely items of interest within an application, and a local user embedding may modify and/or augment the prediction based on information specific to the user. In this manner, the user embedding may be used to augment any number of machine-learned algorithms (e.g., ranking, prediction, and/or embedding algorithms).

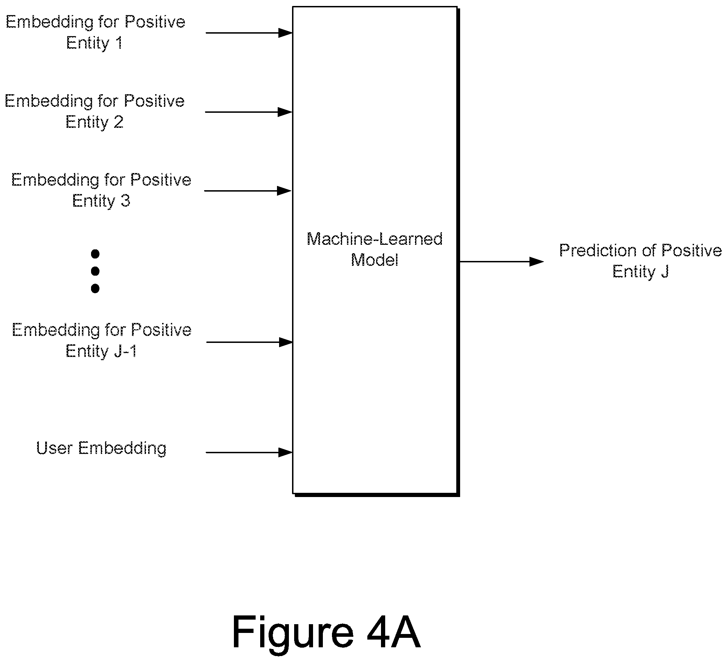

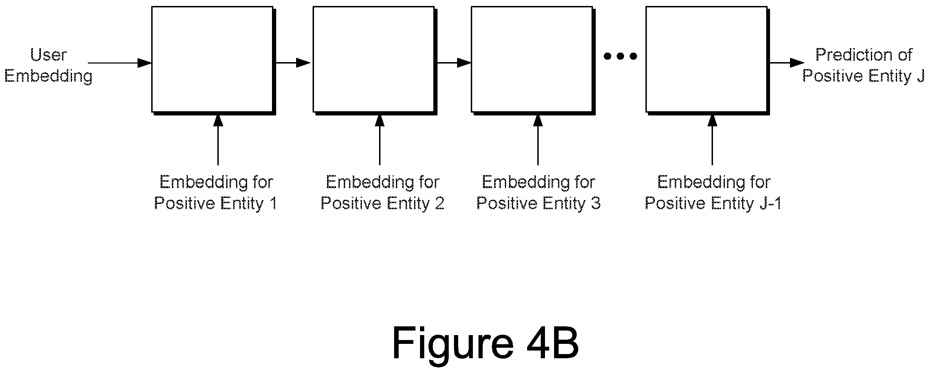

As one example, Figure 4A illustrates a machine-learned model which is highly similar to the model illustrated in Figure 3A, except that the model illustrated in Figure 4A also receives a user embedding as an input, where the user embedding is an embedding that encodes information descriptive of the user of the particular client device which inference/training is occurring. Likewise, Figure 4B illustrates a machine-learned model which is highly similar to the model illustrated in Figure 3B, except that the model illustrated in Figure 4B also receives a user embedding as an input.

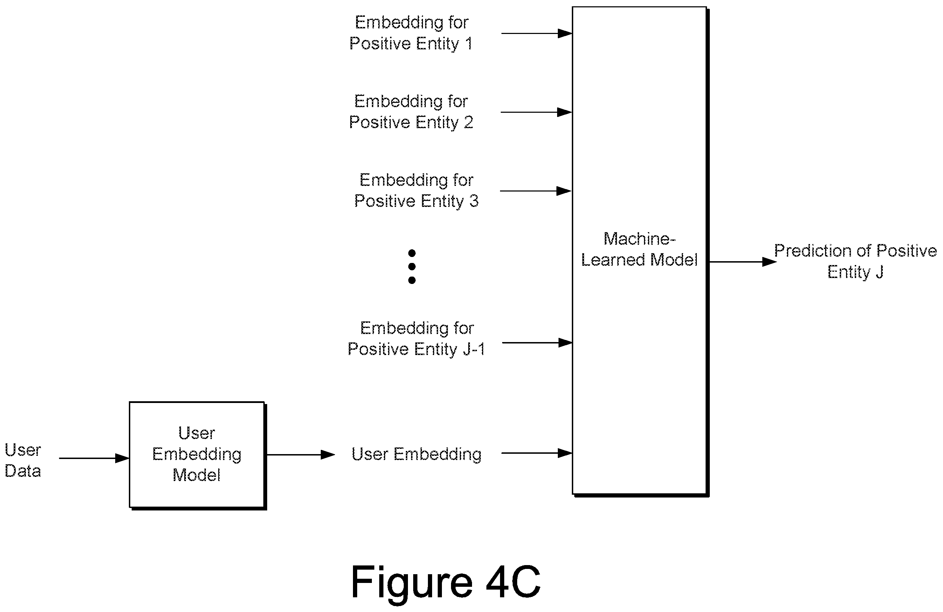

As another example, Figure 4C shows a scheme in which the user embedding is produced by a machine-learned user embedding model based on a set of user data. For example, the user data can include user demographic data and/or other information that describes a user or a user's behavior which is stored locally at the client device. The learning signal from the loss on the predicted *Jth* entity can be backpropagated end-to-end to learn updates to the parameters of the machine-learned user embedding model. These parameters of the machine-learned user embedding model (or updates thereto) can be communicated to the central server so that a global user-embedding model applicable to all users can be learned in a federated fashion.

Again, a user may be provided with controls that enable the user to control if certain forms of data are stored and, if stored, how they are used. As described herein, the user data and the user embedding may never leave the user's device, although parameters of the user embedding model or other machine-learned model (or updates thereto) may be provided (e.g., in encrypted and noised form) to a central server for aggregation.

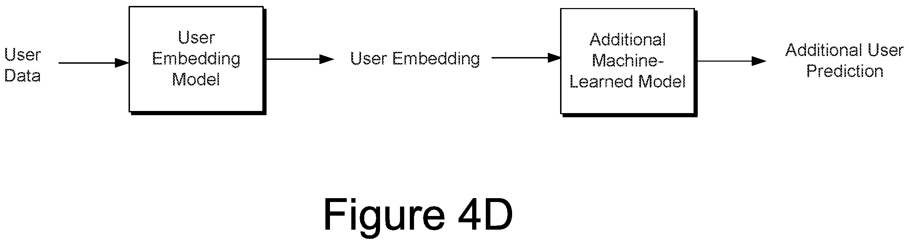

In some implementations, the machine-learned user embedding model and/or the user embedding produced thereby can be used to perform additional on-device inference for the user. For example, Figure 4D shows an additional inference data flow that can be performed on a client device. The user embedding produced by the user embedding model based on the user data can be provided as input (potentially as context for other input data) to an additional machine-learned model. The additional machine-learned model can generate an additional user prediction. The additional user prediction can be any form of classification, recommendation, etc.

Example Methods

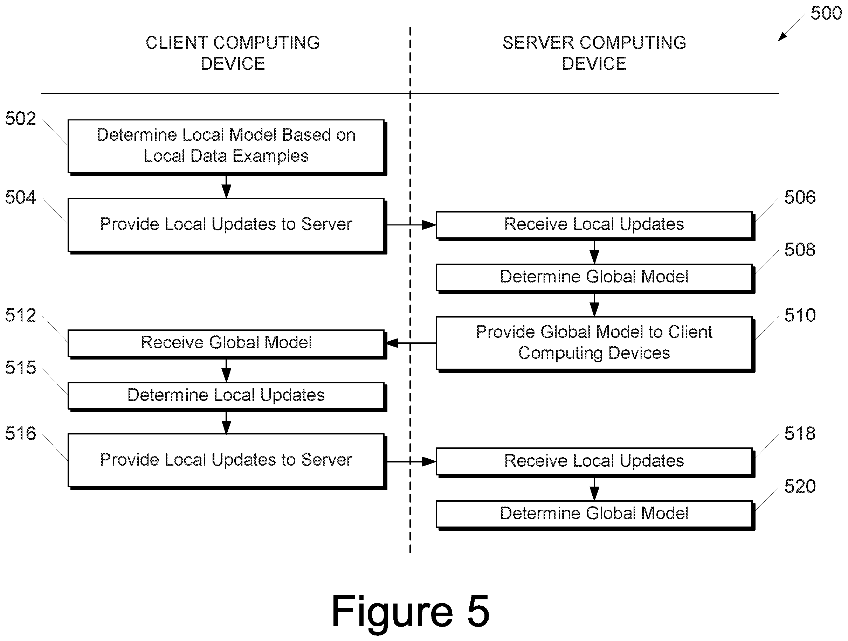

Figure 5 depicts a flow diagram of an example method (500) of determining a global model according to example embodiments of the present disclosure. Method (500) can be implemented by one or more computing devices, such as one or more of the computing devices depicted in Figures 1 and/or 2. In addition, Figure 5 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (502), method (500) can include determining, by a client device, a local model based on one or more local data examples. In particular, the local model can be determined for a loss function using the one or more data examples. The data examples may be generated, for instance, through interaction of a user with the client device. In some implementations, the model may have been pre-trained prior to local training at (502). In some implementations, structured update, sketched update, or other techniques can be used at (502) to render the learned local model or local update communication efficient.

At (504), method (500) can include providing, by the client device, the local model to a server, and at (506), method (500) can include receiving, by the server, the local model. In some implementations, the local model or local update can be encoded or compressed prior to sending the local model or update to the server.

At (508), method (500) can include determining, by the server, a global model based at least in part on the received local model. For instance, the global model can be determined based at least in part on a plurality of local models provided by a plurality of client devices, each having a plurality of unevenly distributed data examples. In particular, the data examples may be distributed among the client devices such that no client device includes a representative sample of the overall distribution of data. In addition, the number of client devices may exceed the number of data examples on any one client device.

In some implementations, as part of the aggregation process, the server can decode each received local model or local update.

At (510), method (500) can include providing the global model to each client device, and at (512), method (500) can include receiving the global model.

At (515), method (500) can include determining, by the client device, a local update. In a particular implementation, the local update can be determined by retraining or otherwise updating the global model based on the locally stored training data. In some implementations, structured update, sketched update, or other techniques can be used at (515) to render the learned local model or local update communication efficient.

In some implementations, the local update can be determined based at least in part using one or more stochastic updates or iterations. For instance, the client device may randomly sample a partition of data examples stored on the client device to determine the local update. In particular, the local update may be determined using stochastic model descent techniques to determine a direction in which to adjust one or more parameters of the loss function.

In some implementations, a step size associated with the local update determination can be determined based at least in part on a number of data examples stored on the client device. In further implementations, the stochastic model can be scaled using a diagonal matrix, or other scaling technique. In still further implementations, the local update can be determined using a linear term that forces each client device to update the parameters of the loss function in the same direction.

At (516), method (500) can include providing, by the client device, the local update to the server. In some implementations, the local model or local update can be encoded prior to sending the local model or update to the server.

At (518), method (500) can include receiving, by the server, the local update. In particular, the server can receive a plurality of local updates from a plurality of client devices.

At (520), method (500) can include again determining the global model. In particular, the global model can be determined based at least in part on the received local update(s). For instance, the received local updates can be aggregated to determine the global model. The aggregation can be an additive aggregation and/or an averaging aggregation. In particular implementations, the aggregation of the local updates can be proportional to the partition sizes of the data examples on the client devices. In further embodiments the aggregation of the local updates can be scaled on a per-coordinate basis.

Any number of iterations of local and global updates can be performed. That is, method (500) can be performed iteratively to update the global model based on locally stored training data over time.

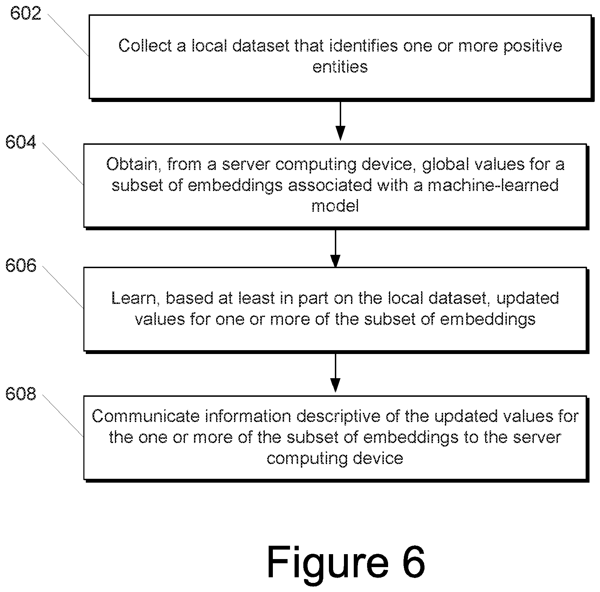

Figure 6 depicts a flow chart diagram of an example method to perform federated learning at a client device according to example embodiments of the present disclosure.

At (602), method (600) can include collecting, by a client computing device, a local dataset that identifies one or more positive entities, wherein the local dataset is stored locally by the client computing device.

At (604), method (600) can include obtaining, by the client computing device and from a server computing device, global values for a subset of embeddings associated with a machine-learned model. The subset of embeddings can include one or more positive entity embeddings respectively associated with the one or more positive entities and one or more negative entity embeddings respectively associated with one or more negative entities not identified in the local dataset. The subset of embeddings can be a subset of a vocabulary of embeddings associated with the machine-learned model.

At (606), method (600) can include learning, by the client computing device and based at least in part on the local dataset, updated values for one or more of the subset of embeddings associated with the machine-learned model.

At (608), method (600) can include communicating, by the client computing device, information descriptive of the updated values for the one or more of the subset of embeddings associated with the machine-learned model to the server computing device.

In some implementations, obtaining, by the client computing device from the server computing device at (604), the global values for the subset of embeddings associated with a machine-learned model includes: requesting and receiving, by the client computing device and from the server computing device, the global values for the subset of embeddings exclusive of a remainder of the vocabulary of embeddings associated with the machine-learned model.

In some implementations, obtaining, by the client computing device from the server computing device at (604), the global values for the subset of embeddings associated with a machine-learned model includes: identifying, by the client computing device, one or more slices of the vocabulary of embeddings that include the one or more positive entities; and obtaining, by the client computing device and from the server computing device, the one or more slices of the vocabulary of embeddings, wherein each of the one or more slices contains at least one of the one or more positive entities and at least one of the one or more negative entities.

In some implementations, each of the one or more slices includes a respective subset of the vocabulary of embeddings that have been grouped based on at least one of a semantic similarity and a semantic association.

In some implementations, the one or more slices of the vocabulary comprise one or more geographic slices of a vocabulary of location embeddings. In some implementations, each geographic slice includes a respective subset of embeddings that correspond to locations within a common geographic area. In some implementations, the one or more slices correspond to one or more map tiles covering respective portions of a map of the Earth.

In some implementations, the one or more negative entities are identified by a similarity search relative to the one or more positive entities.

In some implementations, the client computing device is associated with a particular user; and the method (600) further includes: learning, by the client computing device and based at least in part on the local dataset, a user embedding associated with the particular user of the client computing device; and storing, by the client computing device, the user embedding locally at the client computing device.

In some implementations, the user embedding is learned jointly with the updated values for the one or more of the subset of embeddings associated with the machine-learned model. In some implementations, the user embedding includes a context matrix within the machine-learned model.

In some implementations, learning, by the client computing device and based at least in part on the local dataset at (606), the user embedding associated with the particular user of the client computing device includes learning, by the client computing device and based at least in part on the local dataset, updated parameter values for a machine-learned user embedding model configured to generate the user embedding based on data descriptive of the user.

In some implementations, the method (600) further includes communicating, by the client computing device, information descriptive of the updated parameter values for the machine-learned user embedding model to the server computing device without communicating the user embedding.

In some implementations, the method (600) further includes performing, by the client computing device, on-device inference on the client device using the user embedding.

In some implementations, learning, by the client computing device and based at least in part on the local dataset at (606), updated values for the one or more of the subset of embeddings associated with the machine-learned model includes: adapting, by the client computing device, a learning rate applied to one or more of the updated values, the learning rate being inversely correlated to a frequency with which the one or more of the updated values is updated.

In some implementations, learning, by the client computing device and based at least in part on the local dataset at (606), updated values for the one or more of the subset of embeddings associated with the machine-learned model includes: determining, by the client computing device, one or more weights for respectively weighting the updated values.

In some implementations, an additional method performed at the server computing device can include determining, by the server computing device, one or more weights for respectively weighting the updated values.

Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

**Claims**

1. A computer-implemented method for federated learning of embeddings, the method comprising:
   for each of one or more federated learning iterations:

   collecting (602), by a client computing device, a local dataset that identifies one or more positive entities, wherein the local dataset is stored locally by the client computing device;
   obtaining (604), by the client computing device and from a server computing device, global values for a subset of embeddings associated with a machine-learned model, wherein the subset of embeddings include one or more positive entity embeddings respectively associated with the one or more positive entities and one or more negative entity embeddings respectively associated with one or more negative entities not identified in the local dataset, and wherein the subset of embeddings comprises a subset of a vocabulary of embeddings associated with the machine-learned model, the obtaining comprising distributing a superset of embeddings to each client, the superset containing embeddings targeted for updating using the local data on the client and additional embeddings logically or semantically related to the targeted embeddings but not corresponding to positive entities;

learning (606), by the client computing device and based at least in part on the local dataset, updated values for one or more of the subset of embeddings associated with the machine-learned model; and

communicating (608), by the client computing device, information descriptive of the updated values for the one or more of the subset of embeddings associated with the machine-learned model to the server computing device.

2. The computer-implemented method according to claim 1, wherein obtaining, by the client computing device from the server computing device, the global values for the subset of embeddings associated with a machine-learned model comprises:

requesting and receiving, by the client computing device and from the server computing device, the global values for the subset of embeddings exclusive of a remainder of the vocabulary of embeddings associated with the machine-learned model.

3. The computer-implemented method according to any preceding claim, wherein obtaining, by the client computing device from the server computing device, the global values for the subset of embeddings associated with a machine-learned model comprises:

identifying, by the client computing device, one or more slices of the vocabulary of embeddings that include the one or more positive entities; and

obtaining, by the client computing device and from the server computing device, the one or more slices of the vocabulary of embeddings, wherein each of the one or more slices contains at least one of the one or more positive entity embeddings and at least one of the one or more negative entity embeddings.

4. The computer-implemented method of claim 3, wherein each of the one or more slices comprises a respective subset of the vocabulary of embeddings that have been grouped based on at least one of a semantic similarity and a semantic association.

5. The computer-implemented method of claim 4, wherein:

the one or more slices of the vocabulary of embeddings comprise one or more geographic slices of a vocabulary of location embeddings; and

each geographic slice includes a respective subset of embeddings that correspond to locations within a common geographic area.

6. The computer-implemented method of claim 5, wherein the one or more slices correspond to one or more map tiles covering respective portions of a map of the Earth.

7. The computer-implemented method according to any preceding claim, wherein the one or more negative entities are identified by a similarity search relative to the one or more positive entities.

8. The computer-implemented method according to any preceding claim, wherein:

the client computing device is associated with a particular user; and
the method further comprises:

learning, by the client computing device and based at least in part on the local dataset, a user embedding associated with the particular user of the client computing device; and
storing, by the client computing device, the user embedding locally at the client computing device.

9. The computer-implemented method according to claim 8, wherein the user embedding is learned jointly with the updated values for the one or more of the subset of embeddings associated with the machine-learned model.

10. The computer-implemented method according to claim 8 or 9, wherein the user embedding comprises a context matrix within the machine-learned model.

**11.** The computer-implemented method of any of claims 8-10, wherein learning, by the client computing device and based at least in part on the local dataset, the user embedding associated with the particular user of the client computing device comprises learning, by the client computing device and based at least in part on the local dataset, updated parameter values for a machine-learned user embedding model configured to generate the user embedding based on data descriptive of the user.

**12.** The computer-implemented method of claim 11, further comprising:
communicating, by the client computing device, information descriptive of the updated parameter values for the machine-learned user embedding model to the server computing device without communicating the user embedding.

**13.** The computer-implemented method according to any preceding claim, wherein learning, by the client computing device and based at least in part on the local dataset, updated values for the one or more of the subset of embeddings associated with the machine-learned model comprises:
adapting, by the client computing device, a learning rate applied to one or more of the updated values, the learning rate being inversely correlated to a frequency with which the one or more of the updated values is updated.

**14.** A client computing device configured to perform the method of any of claims 1-13.

**15.** A computer program product comprising computer readable instructions that, when executed by a computer, cause the computer to perform the method of any of claims 1 to 13.

**Patentansprüche**

**1.** Computerimplementiertes Verfahren zum föderierten Lernen von Einbettungen, wobei das Verfahren Folgendes umfasst:
für jede von einer oder mehreren Iterationen des föderierten Lernens:

Sammeln (602) eines lokalen Datensatzes, der eine oder mehrere positive Einheiten identifiziert, durch eine Client-Rechenvorrichtung, wobei der lokale Datensatz durch die Client-Rechenvorrichtung lokal gespeichert wird;
Erlangen (604) von globalen Werten für eine Teilmenge von Einbettungen, die einem Maschinenlernmodell zugeordnet sind, durch die Client-Rechenvorrichtung und von einer Server-Rechenvorrichtung, wobei die Teilmenge von Einbettungen eine oder mehrere positive Einheitseinbettungen, die jeweils der einen oder den mehreren positiven Einheiten zugeordnet sind, und eine oder mehrere negative Einheitseinbettungen, die jeweils einer oder mehreren negativen Einheiten zugeordnet sind, die in dem lokalen Datensatz nicht identifiziert sind, beinhaltet und wobei die Teilmenge von Einbettungen eine Teilmenge eines Vokabulars von Einbettungen umfasst, die dem Maschinenlernmodell zugeordnet sind, wobei das Erlangen Verteilen einer Obermenge von Einbettungen an jeden Client umfasst, wobei die Obermenge Einbettungen, die zum Aktualisieren unter Verwendung der lokalen Daten auf dem Client anvisiert sind, und zusätzliche Einbettungen enthält, die logisch oder semantisch mit den anvisierten Einbettungen in Beziehung stehen, aber positiven Einheiten nicht entsprechen;
Lernen (606) von aktualisierten Werten für eine oder mehrere der Teilmenge von Einbettungen, die dem Maschinenlernmodell zugeordnet sind, durch die Client-Rechenvorrichtung und mindestens teilweise basierend auf dem lokalen Datensatz; und
Übermitteln (608) von Informationen, welche die aktualisierten Werte für eine oder mehrere der Teilmenge von Einbettungen, die dem Maschinenlernmodell zugeordnet sind, beschreiben, durch die Client-Rechenvorrichtung an die Server-Rechenvorrichtung.

**2.** Computerimplementiertes Verfahren nach Anspruch 1, wobei das Erlangen der globalen Werte für die Teilmenge von Einbettungen, die einem Maschinenlernmodell zugeordnet sind, durch die Client-Rechenvorrichtung von der Server-Rechenvorrichtung Folgendes umfasst:
Anfordern und Empfangen der globalen Werte für die Teilmenge von Einbettungen ausschließlich eines Rests des Vokabulars von Einbettungen, die dem Maschinenlernmodell zugeordnet sind, durch die Client-Rechenvorrichtung und von der Server-Rechenvorrichtung.

3.  Computerimplementiertes Verfahren nach einem der vorhergehenden Ansprüche, wobei das Erlangen der globalen Werte für die Teilmenge von Einbettungen, die einem Maschinenlernmodell zugeordnet sind, durch die Client-Rechenvorrichtung von der Server-Rechenvorrichtung Folgendes umfasst:

    Identifizieren einer oder mehrerer Slices des Vokabulars von Einbettungen, welche die eine oder mehreren positiven Einheiten beinhalten, durch die Client-Rechenvorrichtung; und
    Erlangen der einen oder mehreren Slices des Vokabulars von Einbettungen durch die Client-Rechenvorrichtung und von der Server-Rechenvorrichtung, wobei jede der einen oder mehreren Slices mindestens eine von der einen oder den mehreren positiven Einheitseinbettungen und mindestens eine von der einen oder den mehreren negativen Einheitseinbettungen enthält.

4.  Computerimplementiertes Verfahren nach Anspruch 3, wobei jede der einen oder mehreren Slices eine jeweilige Teilmenge des Vokabulars von Einbettungen umfasst, die basierend auf mindestens einer von einer semantischen Ähnlichkeit und einer semantischen Zuordnung gruppiert wurden.

5.  Computerimplementiertes Verfahren nach Anspruch 4, wobei:

    die eine oder mehreren Slices des Vokabulars von Einbettungen eine oder mehrere geografische Slices eines Vokabulars von Standorteinbettungen umfassen; und
    jede geografische Slice eine jeweilige Teilmenge von Einbettungen, die Standorten innerhalb eines gemeinsamen geografischen Gebiets entsprechen, beinhaltet.

6.  Computerimplementiertes Verfahren nach Anspruch 5, wobei die eine oder mehreren Slices einer oder mehreren Kartenkacheln entsprechen, die jeweilige Abschnitte einer Karte der Erde abdecken.

7.  Computerimplementiertes Verfahren nach einem der vorhergehenden Ansprüche, wobei die eine oder mehreren negativen Einheiten durch eine Ähnlichkeitssuche relativ zu der einen oder den mehreren positiven Einheiten identifiziert werden.

8.  Computerimplementiertes Verfahren nach einem der vorhergehenden Ansprüche, wobei:

    die Client-Rechenvorrichtung einem konkreten Benutzer zugeordnet ist; und
    das Verfahren ferner Folgendes umfasst:

        Lernen einer Benutzereinbettung, die dem konkreten Benutzer der Client-Rechenvorrichtung zugeordnet ist, durch die Client-Rechenvorrichtung und mindestens teilweise basierend auf dem lokalen Datensatz; und
        Speichern der Benutzereinbettung durch die Client-Rechenvorrichtung lokal auf der Client-Rechenvorrichtung.

9.  Computerimplementiertes Verfahren nach Anspruch 8, wobei die Benutzereinbettung gemeinsam mit den aktualisierten Werten für die eine oder mehreren der Teilmenge von Einbettungen, die dem Maschinenlernmodell zugeordnet sind, erlernt wird.

10. Computerimplementiertes Verfahren nach Anspruch 8 oder 9, wobei die Benutzereinbettung eine Kontextmatrix innerhalb des Maschinenlernmodells umfasst.

11. Computerimplementiertes Verfahren nach einem der Ansprüche 8-10, wobei das Lernen der Benutzereinbettung, die dem konkreten Benutzer der Client-Rechenvorrichtung zugeordnet ist, durch die Client-Rechenvorrichtung und mindestens teilweise basierend auf dem lokalen Datensatz Lernen aktualisierter Parameterwerte für ein Benutzereinbettung-Maschinenlernmodell, das dazu konfiguriert ist, die Benutzereinbettung basierend auf Daten, die den Benutzer beschreiben, zu generieren, durch die Client-Rechenvorrichtung und mindestens teilweise basierend auf dem lokalen Datensatz umfasst.

12. Computerimplementiertes Verfahren nach Anspruch 11, ferner umfassend:
    Übermitteln von Informationen, welche die aktualisierten Parameterwerte für das Benutzereinbettung-Maschinenlernmodell beschreiben, durch die Client-Rechenvorrichtung an die Server-Rechenvorrichtung ohne Übermitteln der Benutzereinbettung.

**13.** Computerimplementiertes Verfahren nach einem der vorhergehenden Ansprüche, wobei das Lernen von aktualisierten Werten für die eine oder mehreren der Teilmenge von Einbettungen, die dem Maschinenlernmodell zugeordnet sind, durch die Client-Rechenvorrichtung und mindestens teilweise basierend auf dem lokalen Datensatz Folgendes umfasst:

Anpassen einer Lernrate, die auf einen oder mehrere der aktualisierten Werte angewendet wird, durch die Client-Rechenvorrichtung, wobei die Lernrate umgekehrt proportional zu einer Häufigkeit ist, mit welcher der eine oder die mehreren der aktualisierten Werte aktualisiert werden.

**14.** Client-Rechenvorrichtung, die dazu konfiguriert ist, das Verfahren nach einem der Ansprüche 1-13 durchzuführen.

**15.** Computerprogrammprodukt, umfassend computerlesbare Anweisungen, die bei Ausführung durch einen Computer den Computer veranlassen, das Verfahren nach einem der Ansprüche 1 bis 13 durchzuführen.

**Revendications**

**1.** Procédé mis en œuvre par ordinateur pour l'apprentissage par renforcement, le procédé comprenant :
pour chacune d'une ou de plusieurs itérations d'apprentissage fédéré :

la collecte (602), par un dispositif informatique client, d'un ensemble de données local qui identifie une ou plusieurs entités positives, dans lequel l'ensemble de données local est stocké localement par le dispositif informatique client ;
l'obtention (604), par le dispositif informatique client et à partir d'un dispositif informatique serveur, de valeurs globales pour un sous-ensemble de plongements associés à un modèle d'apprentissage automatique, dans lequel le sous-ensemble de plongements comporte un ou plusieurs plongements d'entités positives respectivement associés aux une ou plusieurs entités positives et un ou plusieurs plongements d'entités négatives respectivement associés à une ou plusieurs entités négatives non identifiées dans l'ensemble de données local, et dans lequel le sous-ensemble de plongements comprend un sous-ensemble d'un vocabulaire de plongements associé au modèle d'apprentissage automatique, l'obtention comprenant la distribution d'un sur-ensemble de plongements à chaque client, le sur-ensemble contenant des plongements ciblés pour la mise à jour à l'aide des données locales sur le client et des plongements supplémentaires logiquement ou sémantiquement liés aux plongements ciblés mais ne correspondant pas à des entités positives ;
l'apprentissage (606), par le dispositif informatique client et basé au moins en partie sur l'ensemble de données local, des valeurs mises à jour pour l'un ou plusieurs des sous-ensembles de plongements associés au modèle appris par machine ; et
la communication (608), par le dispositif informatique client, d'informations descriptives des valeurs mises à jour pour les un ou plusieurs des sous-ensembles de plongements associés au modèle appris par machine au dispositif informatique serveur.

**2.** Procédé mis en œuvre par ordinateur selon la revendication 1, dans lequel l'obtention, par le dispositif informatique client à partir du dispositif informatique serveur, des valeurs globales pour le sous-ensemble de plongements associé à un modèle appris par machine comprend :
la demande et la réception, par le dispositif informatique client et depuis le dispositif informatique serveur, des valeurs globales pour le sous-ensemble de plongements à l'exclusion d'un reste du vocabulaire de plongements associé au modèle appris par machine.

**3.** Procédé mis en œuvre par ordinateur selon une quelconque revendication précédente, dans lequel l'obtention, par le dispositif informatique client à partir du dispositif informatique serveur, des valeurs globales pour le sous-ensemble de plongements associé à un modèle appris par machine comprend :

l'identification, par le dispositif informatique client, d'une ou de plusieurs tranches du vocabulaire des plongements qui comportent les une ou plusieurs entités positives ; et
l'obtention, par le dispositif informatique client et à partir du dispositif informatique serveur, des une ou plusieurs tranches du vocabulaire de plongements, dans lequel chacune des une ou plusieurs des tranches contient au moins l'un des un ou plusieurs plongements d'entités positives et au moins l'un des un ou plusieurs plongements d'entités négatives.

**4.** Procédé mis en œuvre par ordinateur selon la revendication 3, dans lequel chacune des une ou plusieurs tranches comprend un sous-ensemble respectif du vocabulaire de plongements qui ont été regroupés sur la base d'au moins l'une d'une similarité sémantique et d'une association sémantique.

5. Procédé mis en œuvre par ordinateur selon la revendication 4, dans lequel :

les une ou plusieurs tranches du vocabulaire de plongements comprennent une ou plusieurs tranches géographiques d'un vocabulaire de plongements d'emplacement ; et
chaque tranche géographique comporte un sous-ensemble respectif de plongements qui correspondent à des emplacements dans une zone géographique commune.

6. Procédé mis en œuvre par ordinateur selon la revendication 5, dans lequel les une ou plusieurs tranches correspondent à une ou plusieurs tuiles de carte couvrant des parties respectives d'une carte de la Terre.

7. Procédé mis en œuvre par ordinateur selon une quelconque revendication précédente, dans lequel les une ou plusieurs entités négatives sont identifiées par une recherche de similarité par rapport aux une ou plusieurs entités positives.

8. Procédé mis en œuvre par ordinateur selon une quelconque revendication précédente, dans lequel :

le dispositif informatique client est associé à un utilisateur particulier ; et
le procédé comprend également :

l'apprentissage, par le dispositif informatique client et basé au moins en partie sur l'ensemble de données local, d'un plongement d'utilisateur associé à l'utilisateur particulier du dispositif informatique client ; et
le stockage, par le dispositif informatique client, du plongement d'utilisateur localement au niveau du dispositif informatique client.

9. Procédé mis en œuvre par ordinateur selon la revendication 8, dans lequel le plongement d'utilisateur est appris conjointement avec les valeurs mises à jour pour les un ou plusieurs sous-ensembles de plongements associés au modèle appris par machine.

10. Procédé mis en œuvre par ordinateur selon la revendication 8 ou 9, dans lequel le plongement d'utilisateur comprend une matrice de contexte dans le modèle appris par machine.

11. Procédé mis en œuvre par ordinateur selon l'une quelconque des revendications 8 à 10, dans lequel l'apprentissage, par le dispositif informatique client et sur la base au moins en partie de l'ensemble de données local, du plongement d'utilisateur associé à l'utilisateur particulier du dispositif informatique client comprend l'apprentissage, par le dispositif informatique client et sur la base au moins en partie de l'ensemble de données local, de valeurs de paramètres mises à jour pour un modèle de plongement d'utilisateur appris par machine configuré pour générer le plongement d'utilisateur sur la base de données descriptives de l'utilisateur.

12. Procédé mis en œuvre par ordinateur selon la revendication 11, comprenant également :
la communication, par le dispositif informatique client, d'informations descriptives des valeurs mises à jour pour le modèle de plongement d'utilisateur appris par machine au dispositif informatique serveur sans communiquer le plongement d'utilisateur.

13. Procédé mis en œuvre par ordinateur selon une quelconque revendication précédente, dans lequel l'apprentissage, par le dispositif informatique client et basé au moins en partie sur l'ensemble de données local, des valeurs mises à jour pour les un ou plusieurs des sous-ensembles de plongements associés au modèle appris par machine comprend :
l'adaptation, par le dispositif informatique client, d'un taux d'apprentissage appliqué à l'une ou plusieurs des valeurs mises à jour, le taux d'apprentissage étant inversement corrélé à une fréquence à laquelle les une ou plusieurs des valeurs mises à jour sont mises à jour.

14. Dispositif informatique client configuré pour réaliser le procédé selon l'une quelconque des revendications 1 - 13.

15. Produit de programme informatique comprenant des instructions lisibles par ordinateur qui, lorsqu'elles sont exécutées par un ordinateur, amènent l'ordinateur à réaliser le procédé selon l'une quelconque des revendications

1 à 13.

Figure 1

EP 4 049 162 B1

Figure 2

EP 4 049 162 B1

Embedding for Positive
Entity 1

Embedding for Positive
Entity 2

Embedding for Positive
Entity 3

•
•
•

Embedding for Positive
Entity J-1

Machine-Learned
Model

Prediction of Positive
Entity J

# Figure 3A

Prediction of
Positive Entity J

Embedding for
Positive Entity 1

Embedding for
Positive Entity 2

Embedding for
Positive Entity 3

Embedding for
Positive Entity J-1

# Figure 3B

Figure 4A

User
Embedding → [ ] → [ ] → [ ] • • • [ ] → Prediction of
Positive Entity J

Embedding for
Positive Entity 1

Embedding for
Positive Entity 2

Embedding for
Positive Entity 3

Embedding for
Positive Entity J-1

# Figure 4B

Figure 4C

User
Data

User
Embedding
Model

User Embedding

Additional
Machine-
Learned Model

Additional User
Prediction

Figure 4D

Figure 5

CLIENT COMPUTING DEVICE

SERVER COMPUTING DEVICE

502 — Determine Local Model Based on Local Data Examples

504 — Provide Local Updates to Server

506 — Receive Local Updates

508 — Determine Global Model

510 — Provide Global Model to Client Computing Devices

512 — Receive Global Model

515 — Determine Local Updates

516 — Provide Local Updates to Server

518 — Receive Local Updates

520 — Determine Global Model

500

EP 4 049 162 B1

602 — Collect a local dataset that identifies one or more positive entities

604 — Obtain, from a server computing device, global values for a subset of embeddings associated with a machine-learned model

606 — Learn, based at least in part on the local dataset, updated values for one or more of the subset of embeddings

608 — Communicate information descriptive of the updated values for the one or more of the subset of embeddings to the server computing device

# Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019197396 A1
- US 2019227980 A1
- US 2018157989 A1

**Non-patent literature cited in the description**

- **R. GEYER et al.** Differentially Private Federated Learning: A Client Level Perspective. *arXiv:1712.07557*